(19) Europäisches Patentamt
European Patent Office
Office européen des brevets

(11) **EP 4 099 774 A1**

(12) **EUROPEAN PATENT APPLICATION**
published in accordance with Art. 153(4) EPC

(43) Date of publication:
**07.12.2022 Bulletin 2022/49**

(21) Application number: **20916279.1**

(22) Date of filing: **30.01.2020**

(51) International Patent Classification (IPC):
**H04W 72/04** (2009.01)      **H04W 52/02** (2009.01)

(52) Cooperative Patent Classification (CPC):
**H04W 52/02; H04W 72/04;** Y02D 30/70

(86) International application number:
**PCT/JP2020/003565**

(87) International publication number:
**WO 2021/152806 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **TAKAHASHI, Yuki**
**Tokyo 100-6150 (JP)**
• **NAGATA, Satoshi**
**Tokyo 100-6150 (JP)**
• **WANG, Lihui**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes: a control section that determines a span pattern including a span for monitoring a physical downlink control channel (PDCCH) based on a monitoring occasion; and a receiving section that skips monitoring of PDCCH candidates in one or more of the span in a slot. According to one aspect of the present disclosure, appropriate PDCCH monitoring can be performed even when a span is used.

FIG. 7

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., also referred to as 5th generation mobile communication system (5G), 5G+(plus), new radio (NR), and 3GPP Rel. 15 or later) are also being studied.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

Summary of Invention

Technical Problem

In Rel.15 NR, in order to suppress an increase in a processing load on a user terminal (user equipment (UE)) and the like, the maximum number of physical downlink control channel (PDCCH) candidates monitored per slot of one serving cell, the maximum number of non-overlapped control channel elements (CCEs), and the like are specified.

In Rel. 16 NR, a span pattern is defined, and PDCCH monitoring in units of spans is being studied.

However, a problem of overbooking of a PDCCH when a span is used, the restriction on the BD number/CCE number, and the like have not been sufficiently studied yet. If these are not clearly specified, the PDCCH cannot be suitably monitored, and communication throughput may decrease.

One object of the present disclosure is to provide a terminal, a radio communication method, and a base station that can perform appropriate PDCCH monitoring even when a span is used.

Solution to Problem

A terminal according to one aspect of the present disclosure includes: a control section that determines a span pattern including a span for monitoring a physical downlink control channel (PDCCH) based on a monitoring occasion; and a receiving section that skips monitoring of PDCCH candidates in one or more of the span in a slot.

Advantageous Effects of Invention

According to one aspect of the present disclosure, appropriate PDCCH monitoring can be performed even when a span is used.

Brief Description of Drawings

Fig. 1 illustrates one example of overbooking of a CCE.

Fig. 2 illustrates one example of a span and a span pattern.

Figs. 3A and 3B illustrate examples of values of $M^{max, (X,Y), \mu}_{PDCCH}$ and $C^{max, (X,Y), \mu}_{PDCCH}$ being studied in Rel.16 NR.

Fig. 4 illustrates another example of the span and the span pattern.

Fig. 5 illustrates one example of a schematic configuration of a radio communication system according to one embodiment.

Fig. 6 illustrates one example of the configuration of a base station according to one embodiment.

Fig. 7 illustrates one example of the configuration of a user terminal according to one embodiment.

Fig. 8 illustrates one example of the hardware configuration of the base station and the user terminal according to one embodiment.

Description of Embodiments

(Maximum Number of PDCCH Candidates/Maximum Number of CCEs To Be Monitored)

In NR, it is required to control communication by applying a plurality of numerologies. For example, in NR, it is assumed that transmission/reception is performed by applying at least one of a plurality of pieces of subcarrier spacing (SCS) based on a frequency band and the like. SCS used in NR includes 15 kHz, 30 kHz, 60 kHz, 120 kHz, 240 kHz, and the like. Of course, applicable SCS is not limited thereto.

Note that the numerology (SCS) may be associated with a given index $\mu$. For example, $\mu = 0$ may indicate SCS = 15 kHz, $\mu = 1$ may indicate SCS = 30 kHz, $\mu = 2$ may indicate SCS = 60 kHz, and $\mu = 3$ may indicate SCS = 120 kHz. Note that these numbers are examples, and the values are not limited thereto.

In NR, in order to suppress an increase in a processing load of UE, the maximum number of decoding (e.g., blind decoding (BD)) performed by the UE per slot in the active BWP of one serving cell is being studied. The maximum number of BD may be replaced with the maximum number of PDCCH candidates monitored by the UE, the upper limit of BD number, and the like. The "BD" of the present disclosure may be replaced with a "PDCCH candidate to be monitored".

For the same reason, the maximum number of non-overlapped control channel elements (CCEs) per slot in one serving cell is being studied. The maximum number of CCEs may be replaced with the upper limit of CCE number and the like.

The maximum number $M^{max, slot, \mu}_{PDCCH}$ of PDCCH candidates to be monitored per slot of one serving cell may be $M^{max, slot, 0}_{PDCCH} = 44$ (44 if SCS = 15 kHz), $M^{max,slot,1}_{PDCCH} = 36$ (36 if SCS = 30 kHz), $M^{max,slot,2}_{PDCCH} = 22$ (22 if SCS = 60 kHz), and $M^{max,slot,3}_{PDCCH} = 20$ (20 if SCS = 120kHz). Note that these numbers are examples, and the values are not limited thereto.

The maximum number $C^{max,slot,\mu}_{PDCCH}$ of non-overlapped CCEs per slot of one serving cell may be $C^{max,slot,0}_{PDCCH} = 56$ (56 if SCS = 15 kHz), $C^{max,slot,1}_{PDCCH} = 56$ (56 if SCS = 30 kHz), $C^{max,slot,2}_{PDCCH} = 48$ (48 if SCS = 60 kHz), and $C^{max,slot,3}_{PDCCH} = 32$ (32 if SCS = 120kHz). Note that these numbers are examples, and the values are not limited thereto.

The upper limit of the BD number/CCE number may be referred to as a limit on the number of monitoring of PDCCH candidates.

In a non-carrier aggregation (non-CA) case, the upper limit of the BD number and the upper limit of the CCE number for a downlink bandwidth part (DL BWP) having an SCS configuration $\mu$ (e.g., $\mu = 0$ to 3) are $M^{max,slot,\mu}_{PDCCH}$ and $C^{max,slot,\mu}_{PDCCH}$ above, respectively.

UE may report capability information (higher layer parameter "pdcch-BlindDetectionCA") indicating that the UE has capability of monitoring PDCCH candidates for $N^{cap}_{cells}$ downlink cells to a base station. Here, $N^{cap}_{cells}$ may be an integer of 4 or more.

When UE is configured with $N^{DL,\mu}_{cells}$ downlink cells including DL BWP having the SCS configuration $\mu$, wherein $\Sigma^3_{\mu=0} (N^{DL,\mu}_{cells}) \leq 4$ or $\Sigma^3_{\mu=0} (N^{DL,\mu}_{cells}) \leq N^{cap}_{cells}$, the upper limit $M^{total,slot,\mu}_{PDCCH}$ of the BD number and the upper limit $C^{total,slot,\mu}_{PDCCH}$ of the CCE number for each scheduled cell are $M^{max, slot, \mu}_{PDCCH}$ and $C^{max,slot,\mu}_{PDCCH}$ above, respectively.

Note that $N^{DL,\mu}_{cells}$ may correspond to the number of configured downlink cells (which may be referred to as component carriers (CCs)) including the DL BWP having the SCS configuration $\mu$.

When the UE is configured with $N^{DL,\mu}_{cells}$ downlink cells including the DL BWP having the SCS configuration $\mu$ (e.g., $\mu = 0$ to 3), wherein $\Sigma^3_{\mu=0} (N^{DL,\mu}_{cells}) > N^{cap}_{cells}$, it is not required to monitor more than min ($M^{max,slot,\mu}_{PDCCH}$, $M^{total,slot,\mu}_{PDCCH}$) PDCCH candidates for each scheduled cell in an active DL BWP having the SCS configuration $\mu$ of a scheduling cell. Note that min (A, B) returns a minimum value of A and B.

That is, in this case, the UE may derive the upper limit of the number of BD per SCS configuration $\mu$ and per slot by using min ($M^{max,slot,\mu}_{PDCCH}$, $M^{total,slot,\mu}_{PDCCH}$). The UE may derive the upper limit of the CCE number per SCS configuration $\mu$ and per slot with min ($C^{max,slot,\mu}_{PDCCH}$, $C^{total,slot,\mu}_{PDCCH}$).

[Math 1]
Here,

$$M_{\text{PDCCH}}^{\text{total, slot, }\mu} = \left\lfloor N_{\text{cells}}^{\text{cap}} \cdot M_{\text{PDCCH}}^{\text{max, slot, }\mu} \cdot N_{\text{cells}}^{\text{DL, }\mu} \middle/ \sum_{j=0}^{3} N_{\text{cells}}^{\text{DL, }j} \right\rfloor \qquad \text{(Expression 1)}$$

$$C_{\text{PDCCH}}^{\text{total, slot, }\mu} = \left\lfloor N_{\text{cells}}^{\text{cap}} \cdot C_{\text{PDCCH}}^{\text{max, slot, }\mu} \cdot N_{\text{cells}}^{\text{DL, }\mu} \middle/ \sum_{j=0}^{3} N_{\text{cells}}^{\text{DL, }j} \right\rfloor \qquad \text{(Expression 2)}$$

$M_{\text{PDCCH}}^{\text{total,slot,}\mu}$ and $C_{\text{PDCCH}}^{\text{total,slot,}\mu}$ may be referred to as CA restriction (restriction on the BD number/CCE number caused by CA) on the number of monitoring of the PDCCH candidates.

Note that when the UE is configured with a plurality of search space (SS) sets, a PDCCH monitoring occasion (MO, monitoring offset) of each search space set is independent. Thus, the PDCCH candidate number/CCE number (note that A/B may mean at least one of A and B in present disclosure) which the UE is required to monitor may be different between slots.

A network (e.g., base station) may be permitted to configure in the UE the PDCCH candidate number/CCE number per slot that exceeds UE capability (upper limit of number of times of BD and upper limit of CCE number) above-described. When the PDCCH candidate number/CCE number to be monitored in a slot exceeds the above-described upper limit (which may be expressed as overbooking of PDCCH candidates/CCEs), the UE may skip monitoring the PDCCH candidates in the search space set in order from the search space set having a higher index until the upper limit is satisfied. "Skipping" may be replaced with "omitting", "not performing", "ignoring", and the like.

In other words, the UE may determine, as an object to be monitored, a PDCCH candidate excluding a PDCCH candidate in one or more search space sets determined in order from the search space set having a higher index, until the upper limit is satisfied.

The base station may control not to map a PDCCH for PDCCH candidates whose monitoring is assumed to be skipped by the UE.

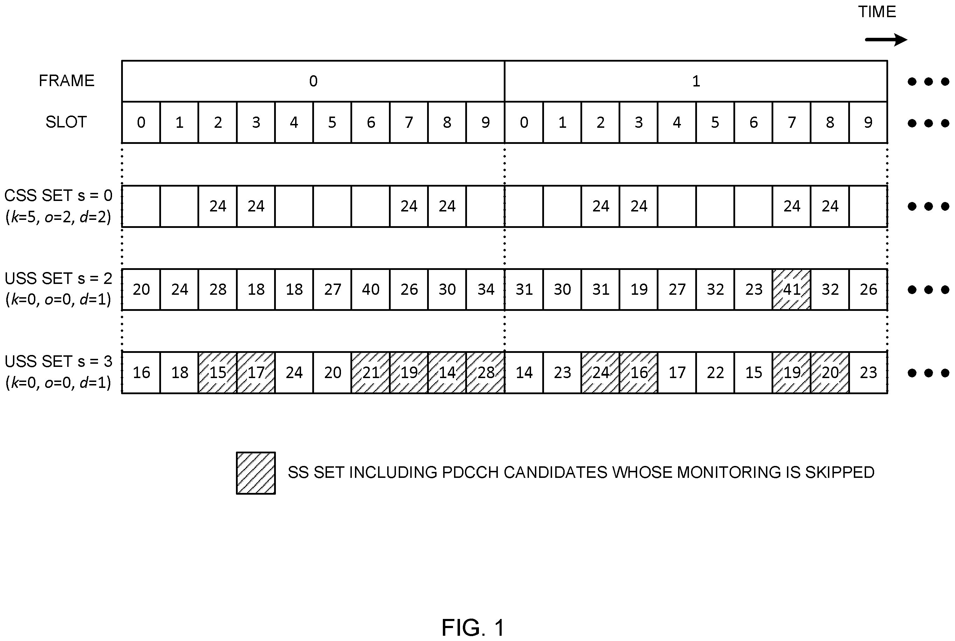

Fig. 1 illustrates one example of overbooking of a CCE. In the example, it is assumed that UE is configured with a common SS (CSS) set of SS set identifier (ID) s = 0, a UE-specific SS (USS) set of s = 2, and USS of s = 3.

For each SS set, k indicates a monitoring periodicity, o indicates an offset of the period, and d indicates the number of consecutive slots monitored per periodicity. Here, that a monitoring period has a length of one slot as in the case of the USS set in the example may be expressed as k = 0 or k = 1.

Fig. 1 illustrates the CCE number required to be monitored for each SS set in each slot. When the sum of the CCE numbers for each SS set exceeds the upper limit (here, 56 assuming $\mu$ = 0) of the CCE number as in a slot 2 of a frame 0, the UE may skip monitoring of PDCCH candidates with the configured largest SS set ID (i.e., s = 3) so that the CCE number to be monitored is equal to or less than the upper limit.

In a slot 7 of a frame 1, the UE performs control of skipping monitoring of not only the PDCCH candidates with the largest SS set ID (s = 3) but of PDCCH candidates with the second largest SS set ID (s = 2) so that the CCE number to be monitored is equal to or less than the upper limit.

The description so far follows the specification of Rel.15 NR.

(PDCCH Monitoring Span)

The above-described conventional upper limit of the BD number/CCE number is a value for each slot. However, in consideration of use cases such as ultra reliable and low latency communications (URLLC), it is preferred that the upper limit of the BD number/CCE number is defined not in a slot unit but in a shorter unit.

In Rel. 16 NR, an orthogonal frequency division multiplexing (OFDM) symbol-based or span-based monitoring capability (upper limit of BD number/CCE number) is being studied.

The span pattern may be a time configuration within one slot and a configuration per slot for PDCCH monitoring in an active DL BWP of a serving cell. The span pattern may be defined by a pair (X, Y) (here, X ≥ Y) of the number of symbols.

Here, X is the minimum number of consecutive symbols (minimum time interval) between the first symbols of each PDCCH monitoring occasion in two consecutive span patterns, and defines a span. Y is the consecutive symbol number for the PDCCH monitoring occasions starting from the first symbol of the X symbols in the X symbols, and defines a span gap.

The span pattern of (X, Y) may be expressed as "span pattern (X, Y)".

In each slot, the same span pattern may be repeated, or the same span pattern may be repeated in units of a plurality of slots. Different span patterns may be used in a slot.

Each span may be included in one slot. Each span is not required to overlap each other. The PDCCH monitoring occasion (MO) may be completely included in one span. Note that the "span" in the present disclosure may be replaced with a symbol set for PDCCH monitoring, a symbol set, a duration based on a PDCCH monitoring occasion (MO, monitoring offset) (or duration derived based on MO), and the like.

For one span, the actual time difference between the starting position (symbol) of the span and the start position of the adjacent (e.g., subsequent or previous) span may be expressed as x. The actual length of one span (in other words, duration) may be expressed as y.

The length of one span (in other words, duration of span) y may be a maximum value between a maximum value of lengths of all CORESETs and a minimum value of candidate values of Y reported by the UE. Note that the last span in the slot may be smaller than the length (maximum value between maximum value of lengths of all CORESETs and minimum value of candidate values of Y reported by the UE).

Intervals between consecutive spans are not required to be equal, but limitations of the same (X, Y) are required to be satisfied by all spans included in a span pattern. That is, the UE may determine a span pattern such that $x \geq X$ and $y \leq Y$ are satisfied for any span of the span pattern.

The UE may transmit one or a plurality of span patterns (X, Y) for each SCS configuration $\mu$ that can be used (or applied) for monitoring as UE capability information by using a higher layer parameter (e.g., "pdcch-MonitoringAnyOccasionsWithSpanGap" of RRC parameter). For example, the span pattern may be at least one of (2, 2), (4, 3), (7, 3), and the like.

The different numbers of starting symbol indices of spans for all MOs per slot are not required to be greater than floor (14/{minimum value of candidate values of X reported by UE}). Note that floor (A) means a floor function of A.

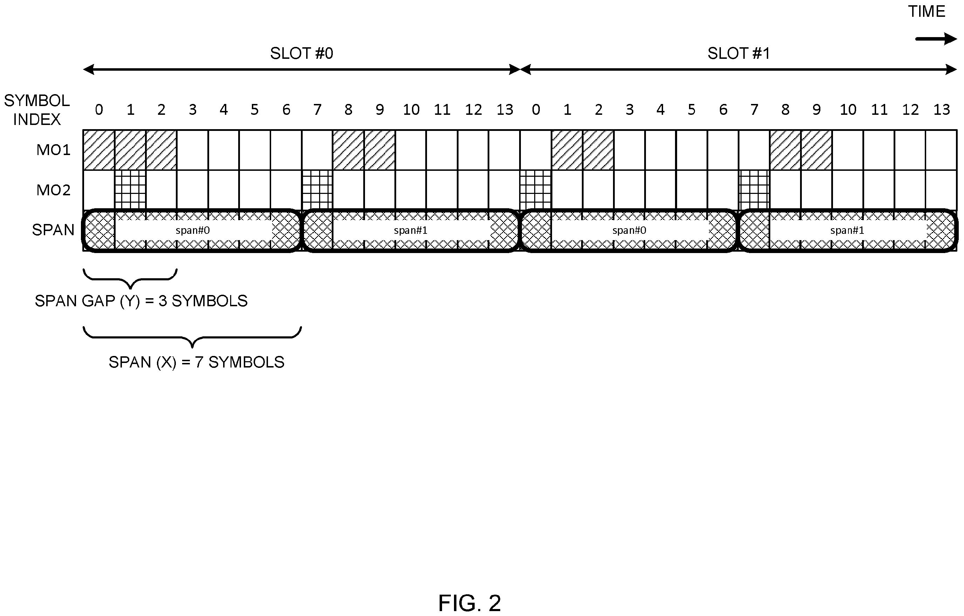

Fig. 2 illustrates one example of a span and a span pattern. In the example, it is assumed that UE reports the above-described set 1 as a set of candidate values of (X, Y). The UE is configured with MO configuration corresponding to MO1 and MO2. Fig. 2 illustrates the timing of the MO of these configurations respectively.

MO1 corresponds to symbols #0, #1, #2, #8, and #9 of a slot #0 and symbols #1, #2, #8, and #9 of a slot #1. MO2 corresponds to symbols #1 and #7 of the slot #0 and symbols #0 and #7 of the slot #1.

When a symbol of any slot is a part of at least one MO, the UE may determine that the symbol is a part of a span. For example, the UE may determine the starting position and length of one or a plurality of spans of each slot based on the configured MO (here, MO1 and MO2) and the reported set of candidate values (X, Y) (here, set 1) so that all slots have the same span pattern.

The UE may try to generate (may be replaced with "apply") a span pattern that satisfies $x \geq X$ and $y \leq Y$ by using (X, Y) selected in a given order of sets of candidate values of (X, Y). When the span pattern can be generated, the UE may use a span pattern, and when the span pattern cannot be generated, the UE may try to generate the span pattern by using the next (X, Y). The given order may be, for example, ascending order of X (tried in order from smallest X) or descending order (tried in order from largest X).

In the case of Fig. 2, it is determined that spans #0 and #1 of (X, Y) = (7, 3) are used for PDCCH monitoring in each slot. Here, the span #0 corresponds to symbols #0 to #6, and the span #1 corresponds to symbols #7 to #13. Note that the span pattern is one example, and different span patterns may be generated under the same condition.

Note that when the UE receives configuration information (e.g., higher layer parameter "PDCCHMonitoringCapabilityConfig") of specific monitoring capability for a serving cell, the UE may monitor PDCCH candidates for each span.

For example, when the UE is given monitoring capability of Rel. 15 ("R15 PDCCH monitoring capability") as PDCCHMonitoringCapabilityConfig for a serving cell, the UE may acquire an instruction for the upper limit of the BD number/CCE number of Rel. 15 NR for each slot described above. The UE may perform PDCCH monitoring for each slot in the serving cell.

When the UE is given monitoring capability of Rel. 16 ("R16 PDCCH monitoring capability") as PDCCHMonitoringCapabilityConfig for a serving cell, the UE may obtain an instruction for the upper limit of the BD number/CCE number of Rel. 16 NR for each span. The UE may perform PDCCH monitoring for each span in the serving cell.

Noted that the monitoring capability of Rel. 15 may be referred to as slot-based monitoring capability, and the monitoring capability of Rel. 16 may be referred to as span-based monitoring capability.

When the UE is not provided PDCCHMonitoringCapabilityConfig for a serving cell, the UE performs the PDCCH monitoring for each slot in the serving cell.

A value different from $M^{max,slot,\mu}_{PDCCH}$ and $C^{max,slot,\mu}_{PDCCH}$ above may be used for limiting the BD number/CCE number when a span is used.

The upper limit of the BD number and the upper limit of the CCE number in one span of a span pattern (X, Y) for a DL BWP having the SCS configuration $\mu$ of one serving cell may be noted as $M^{max,(X,Y),\mu}_{PDCCH}$ and $C^{max,(X,Y),\mu}_{PDCCH}$, respectively. These may be referred to as an upper limit of the BD number per span, an upper limit of the CCE number, and the like.

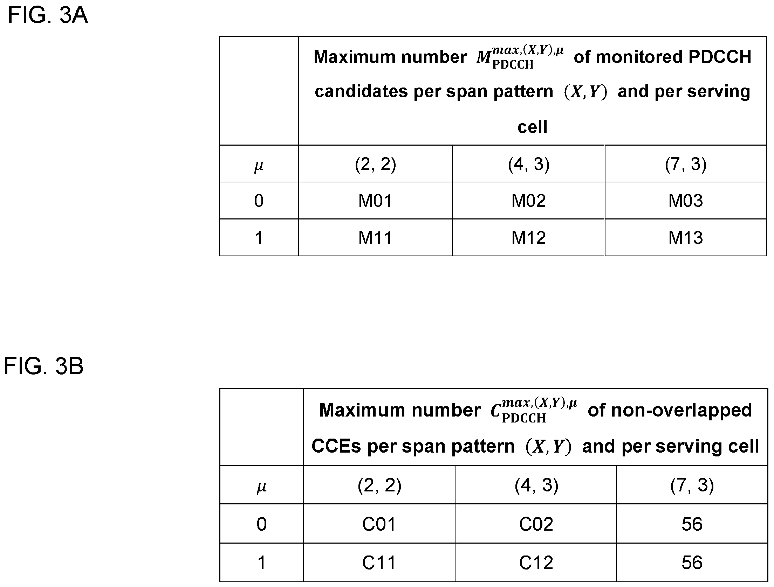

Figs. 3A and 3B illustrate examples of values of $M^{max,(X,Y),\mu}_{PDCCH}$ and $C^{max,(X,Y),\mu}_{PDCCH}$ considered in the Rel.16 NR. In the current specifications, only $C^{max,(7,3),0\ or\ 1}_{PDCCH} = 56$ is specified, and corresponding values for other

(X, Y) and $\mu$ are undetermined. At least, the number of non-overlapping CCEs capable of being monitored in a slot including two spans of (X, Y) is 56 $\times$ 2 = 112, which is larger than 56 in Rel. 15.

Note that, when a plurality of span patterns is applicable in a duration, the UE may be expected to monitor a PDCCH in accordance with a span pattern having the largest upper limit of the BD number/CCE number per span.

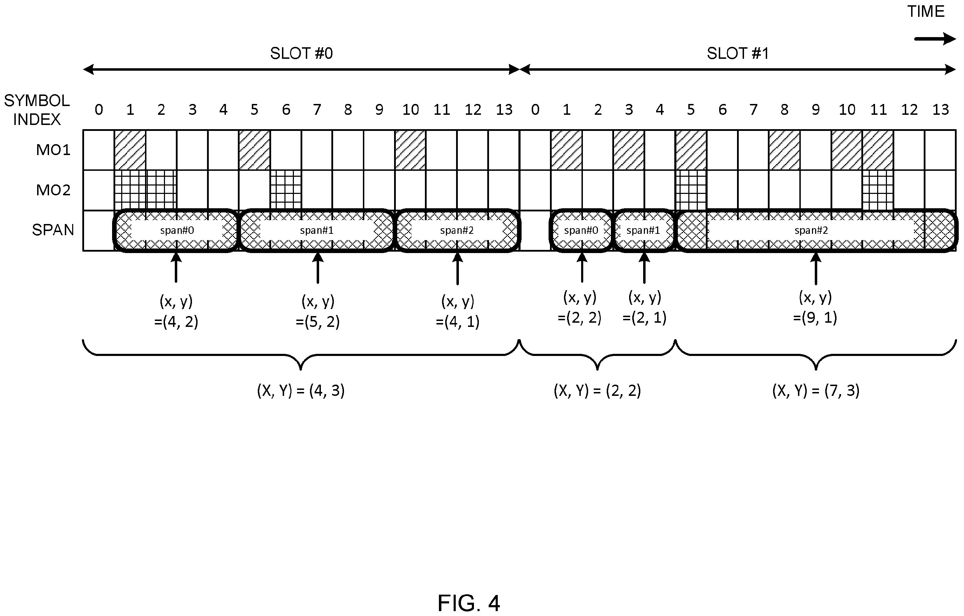

Fig. 4 illustrates another example of a span and a span pattern. In the example, it is assumed that the UE reports the above-described set 3 ({(2, 2), (4, 3), and (7, 3)}) as a set of candidate values of (X, Y). The UE is configured with MO configuration corresponding to the MO1 and the MO2. Fig. 4 illustrates the timing of the MO of each of these configurations.

In the example, $C^{max,\,(2,2),\mu}_{PDCCH} < C^{max,\,(4,3),\mu}_{PDCCH} < C^{max,\,(7,3),\mu}_{PDCCH}$ are assumed.

(X, Y) and (x, y) corresponding to each of the spans #0, #1, and #2 of each of the slots #0 and #1 are illustrated.

In Fig. 4, either of (X, Y) = (2, 2), (4, 3) can be applied to the symbols #1 to #4 of the slot #0. Since $C^{max,\,(2,2),\mu}_{PDCCH} < C^{max,\,(4,3),\mu}_{PDCCH}$ is established, the UE may use (4, 3) for monitoring in the duration.

In Fig. 4, either of (X, Y) = (2, 2), (4, 3) can be applied to the symbols #1 to #4 of the slot #0. Since $C^{max,\,(2,2),\mu}_{PDCCH} < C^{max,\,(4,3),\mu}_{PDCCH}$ is established, the UE may use (4, 3) as the span #0 for monitoring in the duration. Similarly, (4, 3) may be used for the illustrated spans #1 and #2.

Since only (X, Y) = (2, 2) is applicable in the durations of the spans #0 and #1 of the slot #1, the UE uses (2, 2) for monitoring.

All of (X, Y) = (2, 2), (4, 3), and (7, 3) can be applied to the symbols #5 to #13 of the slot #1. Thus, the UE may use (7, 3) having the maximum upper limit of the CCE number as the span #2 for monitoring in the duration.

As for the PDCCH monitoring capability of Rel.16, as illustrated in Fig. 4, an upper limit C of the maximum number of non-overlapping CCEs for channel estimation per monitoring span may be the same or different over different spans in one slot. Each span for Rel. 16 may cover at least one of the USS set and the CSS set.

Now, PDCCH dropping is required to be performed as necessary, even when a span is used. For example, the PDCCH overbooking and the PDCCH dropping may be permitted only in a given cell (e.g., PCell and PSCell). However, whether or not the PDCCH overbooking and the PDCCH dropping are performed in which span in one slot, has not yet been studied.

The upper limit of the BD number/CCE number in the case where a plurality of CCs is configured in the UE (e.g., case where carrier aggregation is applied) has not also been sufficiently studied. If these are not clearly specified, the PDCCH monitoring cannot be suitably performed, and communication throughput may decrease.

The present inventors have conceived a method for performing appropriate PDCCH monitoring even when a span is used.

Hereinafter, embodiments according to the present disclosure will be described in detail with reference to the drawings. A radio communication method according to each of the embodiments may be applied independently, or may be applied in combination with others.

Although, in the present disclosure, an example in which the index $\mu$ related to the numerology (SCS) can take a value of zero or more and three or less is illustrated, the value of $\mu$ is not limited thereto. For example, when $\mu$ can take a value of zero or more and N or less (N is integer), an aspect in which a constant "3" related to $\mu$ of the present disclosure is replaced with the "N" may be applied.

(Radio Communication Method)

<First Embodiment>

A first embodiment relates to in which span in one slot PDCCH overbooking and PDCCH dropping are performed. Note that, in the present disclosure, "perform" may be replaced with "can perform", "permitted to perform", and the like. Furthermore, "performed" may be replaced with "can be performed", "permit to be performed", and the like.

The UE may assume that the PDCCH overbooking and the PDCCH dropping can be performed in all spans in one slot (may determine that monitoring of PDCCH candidates can be skipped in all spans in the slot). In the case, it is preferred that a PDCCH dropping rule is different from the above-described rule of Rel. 15 NR. The rule will be described later in a second embodiment.

The UE may assume that the PDCCH overbooking and the PDCCH dropping can be performed only in a certain span in one slot. For example, the UE may perform the PDCCH overbooking and the PDCCH dropping only in a span with CSS.

The UE may determine whether or not to perform the PDCCH dropping in a span based on higher layer signaling, physical layer signaling, or a combination thereof.

Note that, in the present disclosure, the higher layer signaling may be, for example, any of Radio Resource Control (RRC) signaling, Medium Access Control (MAC) signaling, and broadcast information, or a combination thereof.

The MAC signaling may use, for example, a MAC control element (MAC CE), a MAC protocol data unit (PDU), and the like. The broadcast information may be, for example, a master information block (MIB), a system information block (SIB), remaining minimum system information (RMSI), other system information (OSI), and the like.

The physical layer signaling may be, for example, downlink control information (DCI).

For example, when an RRC parameter indicating that the PDCCH dropping is performed in the n-th (here, n is integer) span in a slot is configured in the UE, the UE may permit the PDCCH dropping to be performed in the n-th span in each slot. When an RRC parameter indicating that the PDCCH dropping is not performed in the n-th span in a slot is configured in the UE, the UE may not permit the PDCCH dropping to be performed in the n-th span in each slot (PDCCH dropping may be performed in another span).

The UE may determine that, based on a DCI detected in a span, the PDCCH dropping is permitted to be performed in the span or another span. For example, the UE may determine, based on a certain field of a DCI detected in a span, whether or not the PDCCH dropping is permitted to be performed in a the span or another span. The certain field may be referred to as a PDCCH dropping indicator field, or may correspond to one or a plurality of other fields having a certain value.

The UE may determine, based on a radio network temporary identifier (RNTI) used for scrambling cyclic redundancy check (CRC) of a DCI detected in the a span, whether or not the PDCCH dropping is permitted to be performed in the span or another span.

The UE may determine which span is available to perform the PDCCH dropping based on specifications. For example, the UE may determine that the PDCCH dropping is permitted to be performed only in the first (leading) span or last span in a slot based on the specifications. The UE may determine that the PDCCH dropping is permitted to be performed until the upper limit of the BD number/CCE number is satisfied in ascending or descending order of spans in a slot. The "available" here may be replaced with "unavailable".

The UE may process the PDCCH overbooking and PDCCH dropping per slot by using the above-described rule of Rel. 15 NR. In the case, the UE may perform the PDCCH dropping by using the above-described rule of Rel. 15 NR without being aware of a span in one slot.

According to the above-described first embodiment, the PDCCH dropping can be performed in an appropriate span.

<Second Embodiment>

A second embodiment relates to the PDCCH dropping rule. The UE may perform the PDCCH dropping in units of search space sets, or may perform the PDCCH dropping in units of PDCCH candidates.

When the PDCCH candidate number/CCE number to be monitored in a slot or a span exceeds an upper limit, the UE may skip monitoring of PDCCH candidates based on a rule among the following rules (1) to (4) or a combination of a plurality thereof until the upper limit is satisfied:

> (1) Monitoring of PDCCH candidates in a search space set is skipped in order from a search space set of a higher or lower SS index (SS ID);
> (2) Monitoring of PDCCH candidates of a CCE is skipped in order from a CCE of a higher or lower CCE index;
> (3) Monitoring of PDCCH candidates in a search space set is skipped in order from a search space set of an index higher or lower than a threshold S (e.g., S is integer); and
> (4) Monitoring of PDCCH candidates of a CCE is skipped in order from a CCE of a CCE index higher or lower than a threshold T (e.g., T is integer).

In (1) to (4) above, "high" may be replaced with "large", and "low" may be replaced with "small".

Note that, in (1) above, when skipping is performed in order from a search space set of a higher SS index, the UE and a base station may assume that a PDCCH (or DCI) with a higher priority is related to a search space set of a lower SS index. The "high" and the "low" may be interchanged with each other.

In (2) above, when any part of a PDCCH candidate is on a CCE of a CCE index to be skipped, it may be determined that the PDCCH candidate is skipped. Here, (2) above may be applied only when interleaving of PRBs is not applied (e.g., higher layer parameter vrb-ToPRB-Interleaver is not provided). In (2) above, it is expected that the number of PDCCH candidates to be dropped is reduced as compared with (1) above, and reliability can be further improved.

In (3) above, S may be a value of a given proportion (e.g., half) of the number of configured SS sets. For example, when the number of SS sets is 10, S may be 5. According to the rule of (3) above, flexibility is provided in the relation between the priority of a PDCCH and an SS index, and the complexity, performance, and the like of high-priority service can be improved.

In (4) above, T may be a value of a predetermined proportion (e.g., half) of the maximum value of a CCE index. For example, if the maximum value of a CCE index is 40, T may be 20. According to the rule of (4) above, the relation between the priority of a PDCCH and an SS index disappears, flexibility is provided, and the complexity, performance, and the like of high-priority service can be improved.

Note that the thresholds S, T, and the like may be defined in specifications in advance, or may be configured in the UE by the higher layer signaling and the like.

According to the above-described second embodiment, the UE can appropriately determine that monitoring of PDCCH candidates corresponding to which SS/CCE is to be skipped.

<Third Embodiment>

A third embodiment relates to derivation of the upper limit of the CCE number in a case where a plurality of CCs is configured in the UE (e.g., case where carrier aggregation is applied). Note that, in the present disclosure, a CC may be replaced with a cell, a carrier, and the like.

When the UE is given a monitoring capability of Rel. 16 ("R16 PDCCH monitoring capability") as PDCCHMonitoringCapabilityConfig for all serving cells, the UE configured with a plurality of CCs calculates (derives) only a parameter $C^{total, (X,Y),\mu}_{PDCCH}$ for span-based CA restriction, and may not calculate a parameter $C^{total,slot,\mu}_{PDCCH}$ for slot-based CA restriction. In this case, a load on the UE in derivation of the upper limit of the CCE number can be reduced.

Here, $C^{total, (X,Y),\mu}_{PDCCH}$ may be referred to as a parameter related to the upper limit of the CCE number for a span pattern (X, Y) of the SCS configuration $\mu$ in the case where the CA restriction is applied. For example, the upper limit of the CCE number per span of the span pattern (X, Y) of an SCS configuration $\mu$ may be determined by min $(C^{max, (X,Y),\mu}_{PDCCH}, C^{total, (X,Y),\mu}_{PDCCH})$.

The UE may determine $C^{total, (X,Y),\mu}_{PDCCH}$ by using, for example, Expression 3 or Expression 4 below.
[Math 2]

$$C^{total,(X,Y),\mu}_{PDCCH} = \left\lfloor N^{cap}_{cells} \cdot C^{max,(X,Y),\mu}_{PDCCH} \cdot N^{DL,(X,Y),\mu}_{cells} \middle/ \sum_{j=0}^{3} N^{DL,j}_{cells} \right\rfloor$$

(Expression 3)

$$C^{total,(X,Y),\mu}_{PDCCH} = \left\lfloor N^{cap}_{cells} \cdot C^{max,(X,Y),\mu}_{PDCCH} \cdot N^{DL,(X,Y),\mu}_{cells} \middle/ \left( \sum_{(X,Y)=0}^{2} \sum_{j=0}^{3} N^{DL,(X,Y),j}_{cells} \right) \right\rfloor$$

(Expression 4)

Here, $N^{DL, (X,Y),\mu}_{cells}$ may correspond to the number of downlink cells having the span pattern (X, Y) of the SCS configuration $\mu$. Note that, in Expression 4, (X, Y) = {0, 1, 2} may indicate (X, Y) = (2, 2), (4, 3), and (7, 3). When a further set of different values is adopted as (X, Y), "2" in Expression 4 may be replaced with a value corresponding to the number of span patterns.

When the UE is given a monitoring capability of Rel.16 ("R16 PDCCH monitoring capability") as PDCCHMonitoringCapabilityConfig for all serving cells, the UE configured with a plurality of CCs may calculate both of a parameter $C^{total, (X,Y),\mu}_{PDCCH}$ for span-based CA restriction and a parameter $C^{total,slot,\mu}_{PDCCH}$ for slot-based CA restriction. In this case, the UE may perform a control for the span-based CA restriction in consideration of the slot-based CA restriction.

In this case, the UE may determine $C^{total, (X,Y),\mu}_{PDCCH}$ by using, for example, Expression 3 or Expression 4 above. The UE may determine $C^{total,slot,\mu}_{PDCCH}$ by using, for example, Expression 2 above, or may assume that $C^{total,slot,\mu}_{PDCCH} = 0$ (or certain value (e.g., negative value or the like)) for each serving cell since there is no serving cell for which a monitoring capability of Rel. 15 is assumed (The assumption may mean deriving (tentatively calculating) or not deriving (e.g., only reading from memory)).

When the UE is given a monitoring capability of Rel. 15 ("R15 PDCCH monitoring capability") as PDCCHMonitoringCapabilityConfig for a serving cell or is not given a PDCCHMonitoringCapabilityConfig , and a monitoring capability or Rel. 16 ("R16 PDCCH monitoring capability") as PDCCHMonitoringCapabilityConfig for other serving cells is given, the UE configured with a plurality of CCs may calculate both of a parameter $C^{total, (X,Y),\mu}_{PDCCH}$ for the span-based CA restriction and a parameter $C^{total,slot,\mu}_{PDCCH}$ for the slot-based CA restriction.

In this case, the UE may determine $C^{total, (X,Y),\mu}_{PDCCH}$ by using, for example, Expression 3 or Expression 4 above. The UE may determine $C^{total,slot,\mu}_{PDCCH}$ by using, for example, Expression 2 above.

According to the above-described third embodiment, the UE can appropriately determine the CA restriction on the CCE number.

Note that, although the upper limit of the CCE number has been described in the third embodiment, this is not a limitation. For example, the present disclosure covers the CA restriction on M by reading the upper limit of the CCE number as the upper limit of the BD number and reading any parameter C* (e.g., $C^{total,slot,\mu}_{PDCCH}$ and $C^{max,\,(X,Y),\mu}_{PDCCH}$) related to the upper limit of the CCE number as a parameter M* (e.g., $M^{total,slot,\mu}_{PDCCH}$ and $M^{max,\,(X,Y),\mu}_{PDCCH}$) corresponding to the upper limit of the BD number.

<Others>

Note that, in the present disclosure, the number of cells indicated by $N^{cap}_{cells}$ may indicate the number of serving cells capable of monitoring a PDCCH, the number of cells configured in UE capable of monitoring the PDCCH, and the like. In the present disclosure, the serving cell may be replaced with a configured cell.

(Radio Communication System)

Hereinafter, a configuration of a radio communication system according to one embodiment of the present disclosure will be described. In the radio communication system, communication is performed by using one or a combination of the above-described radio communication methods according to the embodiments of the present disclosure.

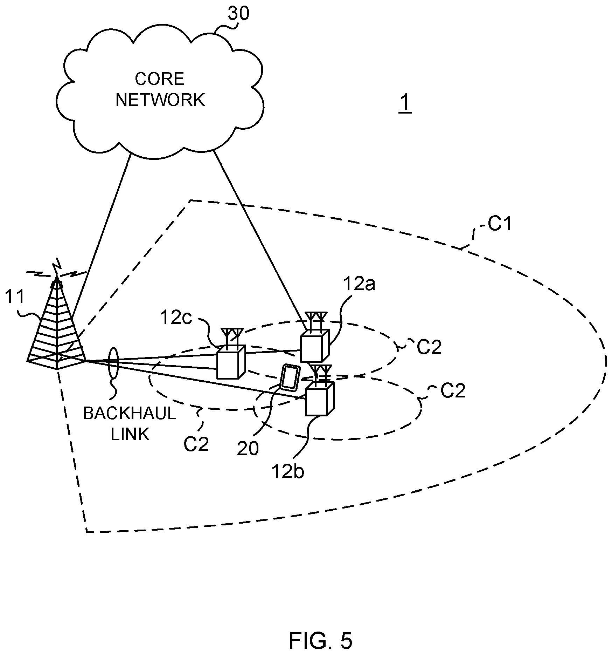

Fig. 5 is a diagram illustrating an example of a schematic configuration of a radio communication system according to one embodiment. A radio communication system 1 may be a system that implements communication by using Long Term Evolution (LTE), 5th generation mobile communication system New Radio (5G NR), and the like specified in the third generation partnership project (3GPP).

The radio communication system 1 may support dual connectivity (multi-RAT dual connectivity (MR-DC)) between a plurality of pieces of radio access technology (RAT). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, the NR base station (gNB) is MN, and an LTE (E-UTRA) base station (eNB) is SN.

The radio communication system 1 may support dual connectivity between a plurality of base stations in the same RAT (e.g., dual connectivity in which both MN and SN are NR base stations (gNBs) (NR-NR dual connectivity (NN-DC)).

The radio communication system 1 may include a base station 11 and base stations 12 (12a to 12c). The base station 11 forms a macro cell C1 with a relatively wide coverage. The base stations 12 (12a to 12c) are disposed in the macro cell C1, and form a small cell C2 narrower than the macro cell C1. User terminal 20 may be located in at least one cell. The arrangement, number, and the like of cells and the user terminal 20 are not limited to the aspects illustrated in the drawings. The base stations 11 and 12 will be collectively referred to as base stations 10 unless these base stations are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cell C2 may be included in FR2. For example, the FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and FR1 may correspond to a frequency range higher than FR2, for example.

The user terminal 20 may perform communication in each CC by using at least one of time division duplex (TDD) and frequency division duplex (FDD).

The plurality of base stations 10 may be connected by wire (e.g., optical fiber in compliance with common public radio interface (CPRI) or X2 interface) or by radio (e.g., NR communication). For example, when NR communication is used as backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include at least one of, for example, an evolved packet core (EPC), a 5G core network (5GCN), a next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (e.g., another single carrier transmission method and another multi-carrier transmission method) may be used as UL and DL radio access methods.

In the radio communication system 1, a downlink shared channel (physical downlink shared channel (PDSCH)) shared by each user terminal 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, and a system information block (SIB), and the like are transmitted by the PDSCH. User data, higher layer control information, and the like may be transmitted by the PUSCH. Master information block (MIB) may be transmitted by the PBCH.

Lower layer control information may be transmitted by the PDCCH. The lower layer control information may include, for example, downlink control information (DCI) including scheduling information of at least one of the PDSCH and the PUSCH.

Note that, the DCI that schedules the PDSCH may be referred to as DL assignment, DL DCI, and the like, and the DCI that schedules the PUSCH may be referred to as UL grant, UL DCI, and the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on the search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, e.g., hybrid automatic repeat request acknowledgement (HARQ-ACK), ACK/NACK, and the like), a scheduling request (SR), and the like may be transmitted by the PUCCH. A random access preamble for establishing a connection with a cell may be transmitted by the PRACH.

Note that, in the present disclosure, downlink, uplink, and the like may be expressed without "link". Furthermore, various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) and a secondary synchronization signal (SSS). A signal block including SS (PSS and SSS) and PBCH (and DMRS for PBCH) may be referred to as an SS/PBCH block, an SS block (SSB), and the like. Note that SS, SSB, and the like may also be referred to as a reference signal.

Furthermore, in the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)."

(Base Station)

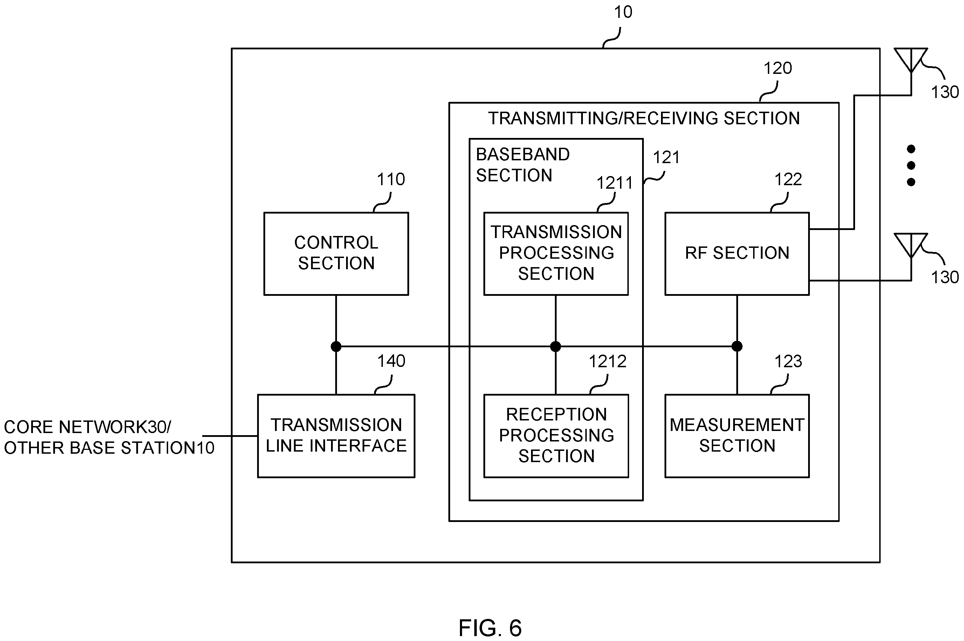

Fig. 6 illustrates is a diagram illustrating an example of the configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that the example mainly describes functional blocks of characteristic parts in the embodiment, and it may be assumed that the base station 10 also includes other functional blocks necessary for radio communication. A part of processing of each section described below may be omitted.

The control section 110 controls the entire base station 10. The control section 110 can include a controller, a control circuit, and the like that are described based on common recognition in the technical field related to the present disclosure.

The control section 110 may control signal generation, scheduling (e.g., resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can include an antenna described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (e.g., precoding), analog beam forming (e.g., phase rotation), and the like.

The transmitting/receiving section 120 (transmission processing section 1211) may perform packet data convergence protocol (PDCP) layer processing, radio link control (RLC) layer processing (e.g., RLC retransmission control), medium access control (MAC) layer processing (e.g., HARQ retransmission control), and the like on, for example, data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency range, filtering processing, amplification, and the like on the baseband signal, and may transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), and a signal to noise ratio (SNR)), signal strength (e.g., received signal strength indicator (RSSI)), propagation path information (e.g., CSI), and the like. The measurement result may be output to the control section 110.

The transmission line interface 140 may perform transmission/reception of a signal (backhaul signaling) to/from an apparatus, another base station 10, or the like included in the core network 30, and may perform acquisition, transmission, or the like of user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

Note that the transmitting/receiving section 120 may transmit a PDCCH in at least a part of a span determined based on a monitoring occasion (PDCCH monitoring occasion).

The transmitting/receiving section 120 may transmit information on a monitoring occasion used for determining a span pattern including a span for monitoring a physical downlink control channel (PDCCH) to the user terminal 20.

The control section 110 may perform control such that a PDCCH is mapped in PDCCH candidates in one or more of the above-described spans in a slot in which the user terminal 20 is assumed to skip the monitoring.

The transmitting/receiving section 120 may transmit configuration information (e.g., higher layer parameter "PDCCHMonitoringCapabilityConfig") on monitoring capability of a physical downlink control channel (PDCCH) for each serving cell to the user terminal 20.

The control section 110 may control mapping of the PDCCH candidates based on at least one of a first parameter (e.g., $C^{total, (X,Y), \mu}_{PDCCH}$) and a second parameter (e.g., $C^{total, slot, \mu}_{PDCCH}$). The first parameter is used for restriction at the time of carrier aggregation on the number of monitoring of span-based PDCCH candidates, whose derivation is controlled by the user terminal 20. The second parameter is used for restriction at the time of carrier aggregation on the number of monitoring of slot-based PDCCH candidates.

(User Terminal)

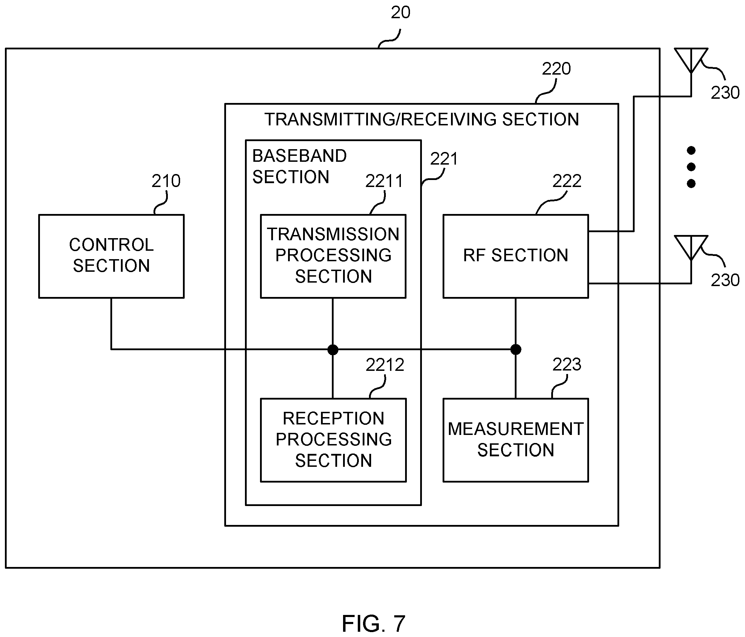

Fig. 7 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that the example mainly describes functional blocks of characteristic parts in the embodiment, and it may be assumed that the user terminal 20 also includes other functional blocks necessary for radio communication. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like, which are described based on common recognition in the technical field related to the present disclosure.

The transmitting/receiving section 220 may be constituted as an integrated transmitting/receiving section, or may be constituted a transmitting section and a receiving section. The transmitting section may be constituted by the transmission processing section 2211 and the RF section 222. The receiving section may be constituted by the reception processing section 2212, the RF section 222, and the measurement section 223.

The transmission/reception antenna 230 can be constituted by an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (e.g., precoding), analog beam forming (e.g., phase rotation), and the like.

The transmitting/receiving section 220 (transmission processing section 2211) may perform PDCP layer processing, RLC layer processing (e.g., RLC retransmission control), MAC layer processing (e.g., HARQ retransmission control), and the like on, for example, data and control information acquired from the control section 210 to generate a bit string to be transmitted.

The transmitting/receiving section 220 (transmission processing unit 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be based on configuration of transform precoding. When transform precoding is enabled for a channel (e.g., PUSCH), the transmitting/receiving section 220 (transmission processing section 2211) may perform DFT processing as the above-described transmission processing in order to transmit the channel by using a DFT-s-OFDM waveform. When it is not the case, the DFT processing may not be performed as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal to acquire user data.

The transmitting/receiving section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, and SNR), signal strength (e.g., RSSI), propagation path information (e.g., CSI), and the like. The measurement result may be output to the control section 210.

Note that the transmitting section and the receiving section of the user terminal 20 in the present disclosure may be constituted by at least one of the transmitting/receiving section 220 and the transmission/reception antenna 230.

Note that the control section 210 may determine (e.g., derive and identify) a span pattern including a span for monitoring a physical downlink control channel (PDCCH) based on a monitoring occasion (PDCCH monitoring occasion).

The transmitting/receiving section 220 may monitor PDCCH candidates based on the above-described span pattern. The control section 210 may determine the span pattern of each component carrier based on an assumption regarding the span patterns of a plurality of component carriers.

The control section 210 may determine a span pattern including a span for monitoring a physical downlink control channel (PDCCH) based on the monitoring occasion.

The transmitting/receiving section 220 may skip monitoring of the PDCCH candidates in one or more of the above-described spans in a slot. For example, the transmitting/receiving section 220 may determine that the monitoring of the PDCCH candidates can be skipped in all the spans in the slot.

The transmitting/receiving section 220 may skip the monitoring of the PDCCH candidates in the slot in order from a PDCCH candidate having a larger control channel element (CCE) index.

The transmitting/receiving section 220 may determine whether or not the monitoring of the PDCCH candidates in a span or another span can be skipped based on the downlink control information (DCI) detected in the span.

The transmitting/receiving section 220 may receive configuration information (e.g., higher layer parameter "PDCCHMonitoringCapabilityConfig") on monitoring capability of a physical downlink control channel (PDCCH) for each serving cell from the base station 10.

The control section 210 may control derivation of at least one of the first parameter (e.g., $C^{total, (X,Y), \mu}_{PDCCH}$) and the second parameter (e.g., $C^{total, slot, \mu}_{PDCCH}$). The first parameter is used for restriction at the time of carrier aggregation on the number of monitoring of span-based PDCCH candidates. The second parameter is used for restriction at the time of carrier aggregation on the number of monitoring of slot-based PDCCH candidates.

When the configuration information on all serving cells indicates the span-based monitoring capability, the control section 210 may derive only the above-described first parameter, and perform control in which the above-described second parameter is not derived.

When the configuration information on all the serving cells indicates the span-based monitoring capability, the control section 210 may assume that the second parameter is a given value (e.g., 0).

When the above-described configuration information on a part of serving cells indicates the span-based monitoring capability, the control section 210 may perform control of deriving both of the above-described first and second parameters.

(Hardware Configuration)

Note that the block diagrams that have been used to describe the above embodiments illustrate blocks in functional units. These functional blocks (configuration sections) may be implemented in arbitrary combinations of at least one of hardware and software. Further, the method for implementing each functional block is not particularly limited. That is, each functional block may be implemented by a single apparatus physically or logically coupled, or may be implemented by directly or indirectly connecting two or more physically or logically separate apparatuses (using wires, radio, or the like, for example) and using these plural apparatuses. The functional blocks may be achieved by combining the one apparatus or the plurality of apparatuses with software.

Here, the functions include, but are not limited to, assessment, determination, judging, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (configuration section) that causes transmission to function may be called as a transmitting unit, a transmitter and the like. In any case, as described above, the implementation method is not particularly limited.

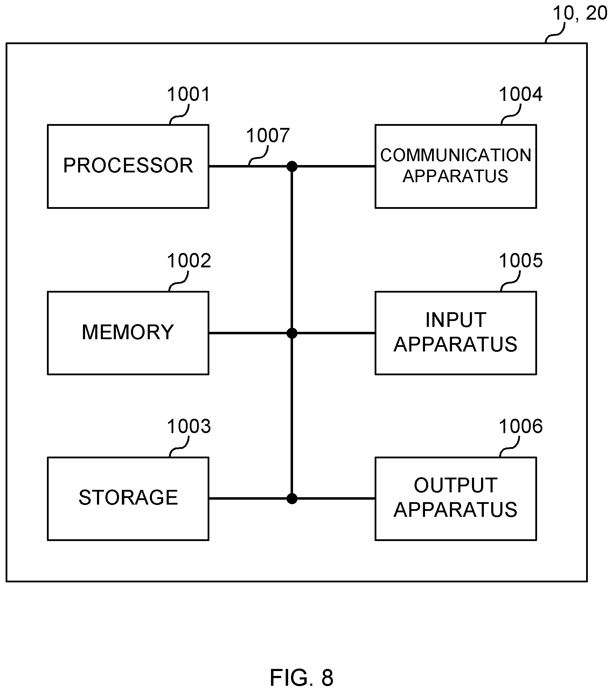

For example, the base station, the user terminal, and the like according to one embodiment of the present disclosure may function as a computer that executes the processing of the radio communication method of the present disclosure. Fig. 8 is a diagram illustrating an example of a hardware configuration of the base station and the user terminal according to one embodiment. The above-described base station 10 and user terminal 20 may be physically configured as a computer apparatus including a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit can be replaced with each other. The hardware configuration of the base station 10 and the user terminal 20 may be designed to include one or a plurality of each apparatus illustrated in the drawings, or may be designed not to include some apparatuses.

For example, although only one processor 1001 is illustrated, a plurality of processors may be provided. Further, the processing may be executed by one processor, or the processing may be executed simultaneously, in sequence, or in different manners, by two or more processors. Note that the processor 1001 may be implemented with one or more chips.

Each function of the base station 10 and the user terminal 20 is implemented by reading given software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may include a central processing unit (CPU) including an interface with peripheral equipment, a control apparatus, an arithmetic apparatus, a register, and the like. For example, at least a part of the above-described control section 110(210), transmitting/receiving section 120(220), and the like may be implemented by the processor 1001.

Furthermore, the processor 1001 reads, for example, programs (program codes), software modules, or data from at least one of the storage 1003 and the communication apparatus 1004 into the memory 1002, and executes various kinds of processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may include at least one of, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (main storage apparatus),, and the like. The memory 1002 can store a program (program code), a software module, and the like, which are executable for implementing the radio communication method according to one embodiment of the present disclosure.

The storage 1003 is a computer-readable recording medium, and may include at least one of, for example, a flexible disk, a floppy (registered trademark) disk, a magneto-optical disk (e.g., compact disc (compact disc ROM (CD-ROM) and the like), digital versatile disc, Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmitting/receiving device) for performing inter-computer communication via at least one of a wired network or a radio network, and is referred to as, for example, a network device, a network controller, a network card, a communication module, and the like. The communication apparatus 1004 may include a high frequency switch, a duplexer, a filter, a frequency synthesizer, and the like in order to implement at least one of, for example, frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating a transmitting section 120a (220a) and a receiving section 120b (220b) from each other.

The input apparatus 1005 is an input device that receives an for receiving input from outside (e.g., a keyboard, a mouse, a microphone, a switch, a button, a sensor, and the like). The output apparatus 1006 is an output device for performing outputting to the outside (e.g., a display, a speaker, a light emitting diode (LED) lamp, and the like). Note that the input apparatus 1005 and the output apparatus 1006 may be an integrated configuration (e.g., touch panel).

Furthermore, those pieces of apparatuses including the processor 1001, the memory 1002, and the like are connected by the bus 1007 for communicating information. The bus 1007 may be formed with a single bus, or may be formed with buses that vary between apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and a part or all of each functional block may be implemented by the hardware. For example, the processor 1001 may be implemented with at least one of these pieces of hardware.

(Variations)

Note that terms described in the present disclosure and terms necessary for understanding the present disclosure may be replaced with other terms that have the same or similar meanings. For example, a channel, a symbol, and a signal (signal or signaling) may be replaced with each other. Further, the signal may be a message. The reference signal can be abbreviated as an "RS", and may be referred to as a "pilot", a "pilot signal", and the like, depending on which standard applies. Further, a component carrier (CC) may be referred to as a cell, a frequency carrier, a carrier frequency, and the like.

A radio frame may include one or more periods (frames) in the time domain. Each of one or a plurality of periods (frames) constituting a radio frame may be referred to as a subframe. Furthermore, a subframe may be constituted by one or a plurality of slots in the time domain. A subframe may be a fixed time duration (e.g., 1 ms) that is not dependent on numerology.

Here, the numerology may be a communication parameter applied to at least one of transmission and reception of a signal or a channel. The numerology may indicate at least one of, for example, subcarrier spacing (SCS), a bandwidth, a symbol length, a cyclic prefix length, a transmission time interval (TTI), the number of symbols per TTI, radio frame configuration, specific filtering processing performed by a transceiver in a frequency domain, and specific windowing processing performed by the transceiver in a time domain.

The slot may include one or a plurality of symbols (orthogonal frequency division multiplexing (OFDM) symbol, single carrier frequency division multiple access (SC-FDMA) symbol, and the like) in the time domain. The slot may be a time unit based on the numerology.

A slot may include a plurality of mini slots. Each mini slot may be constituted by one or a plurality of symbols in the time domain. The mini slot may be referred to as a "subslot". Each mini slot may be constituted by fewer symbols than a slot. A PDSCH (or PUSCH) transmitted in a time unit larger than a mini slot may be referred to as a PDSCH (PUSCH) mapping type A. A PDSCH (or PUSCH) transmitted by using a mini slot may be referred to as a PDSCH (PUSCH) mapping type B.

A radio frame, a subframe, a slot, a mini slot, and a symbol all represent the time unit in signal communication. The radio frame, the subframe, the slot, the mini slot, and the symbol may be each called by other applicable names. Note that time unit such as a frame, a subframe, a slot, a mini slot, and a symbol in the present disclosure may be replaced with each other.

For example, one subframe may be referred to as a TTI. A plurality of consecutive subframes may be referred to as TTI. One slot or one mini slot may be referred to as TTI. That is, at least one of the subframe and TTI may be a subframe (1 ms) in the existing LTE, may be a duration shorter than 1 ms (e.g., one to thirteen symbols), or may be a duration longer than 1 ms. Note that the unit to represent the TTI may be referred to not as a subframe but as a slot, a mini slot, and the like.

Here, a TTI refers to the minimum time unit of scheduling in radio communication, for example. For example, in LTE systems, the base station schedules the radio resources (e.g., frequency bandwidth and transmission power that can be used in each user terminal) to allocate to each user terminal in TTI units. Note that the definition of the TTI is not limited thereto.

The TTI may be the transmission time unit of channel-encoded data packets (transport blocks), code blocks, codewords, and the like, or may be the unit of processing in scheduling, link adaptation, and the like. Note that, when a TTI is given, a time interval (e.g., the number of symbols) in which the transport blocks, the code blocks, the codewords, and the like are actually mapped may be shorter than the TTI.

Note that, when one slot or one mini slot is referred to as a TTI, one or more TTIs (i.e., one or more slots or one or more mini slots) may be the minimum time unit of scheduling. Also, the number of slots (the number of mini slots) to constitute the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (e.g., a normal TTI, a subframe, etc.) may be replaced with a TTI having a time duration exceeding 1 ms, and a short TTI (e.g., a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. The number of subcarriers in RB may be the same regardless of the numerology, and may be twelve, for example. The number of subcarriers included in the RB may be determined based on the numerology.

Also, an RB may include one or a plurality of symbols in the time domain, and may be one slot, one mini slot, one subframe, or one TTI in length. One TTI, one subframe, and the like each may be comprised of one or a plurality of resource blocks.

Note that one or a plurality of RBs may be referred to as a physical resource block (Physical RB (PRB)), a sub-carrier group (SCG), a resource element group (REG), a PRB pair, an RB pair, and the like.

Further, the resource block may be constituted by one or a plurality of resource elements (REs). For example, one RE may be a radio resource domain of one subcarrier and one symbol.

The bandwidth part (BWP) (which may be referred to as partial bandwidth and the like) may represent a subset of consecutive common resource blocks (RBs) for certain numerology in a certain carrier. Here, the common RB may be specified by an RB index with reference to a common reference point of the carrier. The PRB may be defined in a BWP and numbered within that BWP.

The BWP may include a BWP for UL (UL BWP) and a BWP for DL (DL BWP). For the UE, one or a plurality of BWPs may be configured within one carrier.

At least one of the configured BWPs may be active, and the UE may not assume to transmit or receive a given signal/channel outside the active BWP. Note that a "cell", a "carrier", and the like in the present disclosure may be replaced with the "BWP".

Note that the structures of radio frames, subframes, slots, mini slots, symbols, and the like described above are merely examples. For example, configurations of the number of subframes in a radio frame, the number of slots per subframe or radio frame, the number of mini slots in a slot, the number of symbols and RBs in a slot or a mini slot, the number of subcarriers in an RB, the number of symbols in a TTI, a symbol length, a cyclic prefix (CP) length, and the like can be variously changed.

Also, the information, parameters, and the like described in the present disclosure may be represented in absolute values or in relative values with respect to given values, or may be represented using other applicable information. For example, a radio resource may be specified by a given index.

The names used for parameters and the like in the present disclosure are in no respect limiting. Further, a mathematical expression and the like using these parameters may differ from those explicitly disclosed in the present disclosure. Various channels (e.g., PUCCH and PDCCH) and information elements can be identified by any suitable name. Various names allocated to these various channels and information elements are in no respect limiting.

The information, signals, and the like described in the present disclosure may be represented using a variety of different techniques. For example, data, instructions, commands, information, signals, bits, symbols, and chips, all of which may be referenced throughout the above description, may be represented by voltages, currents, electromagnetic waves, magnetic fields or particles, optical fields or photons, or any combination of these.

Also, information, signals, and the like can be output in at least one of directions that are from upper layers to lower layers and from lower layers to upper layers. Information, signals, and the like may be input and output via a plurality of network nodes.

The input and/or output information, signals, and the like may be stored in a specific location (e.g., in a memory), or may be managed by using a management table. The information, signals, and the like to be input and output can be overwritten, updated, or appended. The information, signals, and the like that are output may be deleted. The input information, signals, and the like may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. The RRC signaling may be referred to as an RRC message, and may be, for example, an RRC connection setup message, an RRC connection reconfiguration message, and the like. Further, notification of MAC signaling may be performed using, for example, a MAC control element (MAC CE).

Also, notification of given information (e.g., notification of information to the effect that "X holds") does not necessarily have to be sent explicitly, and may be sent implicitly (e.g., by not reporting the given information, or by reporting another piece of information).

Determination may be made in values represented by one bit (0 or 1), may be made in Boolean values represented by true or false, or may be made by comparing numerical values (e.g., comparison against a given value).

Software, whether referred to as software, firmware, middleware, microcode, or hardware description language, or called by other names, should be interpreted broadly, to mean instructions, instruction sets, codes, code segments, program codes, programs, subprograms, software modules, applications, software applications, software packages, routines, subroutines, objects, executable files, execution threads, procedures, functions, and the like.

Further, software, instruction, information, and the like may be transmitted/received via a transmission medium. For example, when software is transmitted from a website, a server, or other remote sources by using at least one of wired technology (coaxial cable, optical fiber cable, twisted-pair cable, digital subscriber line (DSL), and the like) or wireless technology (infrared light, microwave, and the like), at least one of these wired technology and wireless technology is included in the definition of the transmission medium.

The terms "system" and "network" used in the present disclosure can be used interchangeably. The "network" may mean an apparatus (e.g., base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", "component carrier" , and the like may be interchangeably used. The base station may be referred to by a term such as a macro cell, a small cell, a femto cell, and a pico cell, and the like.

The base station can accommodate one or a plurality of (e.g., three) cells. When a base station accommodates a plurality of cells, the entire coverage area of the base station can be partitioned into a plurality of smaller areas. Each smaller area can provide communication service through a base station subsystem (e.g., indoor small base station (remote radio head (RRH))). The term "cell" or "sector" refers to a part or the whole of a coverage area of at least one of a base station and a base station subsystem that perform communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or by other appropriate terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a vehicle (e.g., a car, an airplane and the like), an unmanned moving object (e.g., a drone, an autonomous car and the like), or a (manned or unmanned) robot. Note that at least one of the base station and the mobile station also includes an apparatus that does not necessarily move during a communication operation. For example, at least one of the base station and the mobile station may be Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication between a plurality of pieces of user terminal (which may be referred to as, for example, device-to-device (D2D) and vehicle-to-everything (V2X), and the like)). In this case, the user terminal 20 may be configured to have the functions of the base station 10 described above. Further, the terms such as "uplink" and "downlink" may be replaced with terms corresponding to the terminal-to-terminal communication (e.g., "side"). For example, an uplink channel, a downlink channel, and the like may be replaced with a side channel.

Similarly, the user terminal in the present disclosure may be replaced with a base station. In the case, the base station 10 may have the functions of the user terminal 20 described above.

In the present disclosure, the operation performed by the base station may be performed by an upper node thereof in some cases. In a network including one or a plurality of network nodes with a base station, it is clear that various operations performed so as to communicate with a terminal can be performed by a base station, one or more of network nodes (e.g., mobility management entity (MME) and serving-gateway (S-GW) may be possible, but are not limiting) other than the base station, or a combination thereof.

The aspects/embodiments described in the present disclosure may be used individually or in combinations, which may be switched depending on the mode of implementation. Further, the order of processing procedures, sequences, flowcharts, and the like of the aspects/embodiments described in the present disclosure may be re-ordered as long as inconsistencies do not arise. For example, although various methods have been shown in the present disclosure with various components of steps using exemplary orders, the specific orders that are shown herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate radio communication methods, a next generation system expanded based thereon, and the like. Furthermore, a plurality of systems may be combined to be applied (for example, a combination of LTE or LTE-A and 5G) .

The phrase "based on" used in the present disclosure does not mean "based on only", unless otherwise specified. In other words, the phrase "based on" means both "based only on" and "based at least on."

Reference to elements with designations such as "first," "second", and the like as used in the present disclosure does not generally limit the number/quantity or order of these elements. These designations may be used in the present disclosure as a method convenient in distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up, search, inquiry (e.g., looking up in a table, database, or another data structure), ascertaining, and the like.

Furthermore, "determining" as used herein may be interpreted to mean making determination related to receiving (e.g., receiving information), transmitting (e.g., transmitting information), inputting, outputting, accessing (e.g., accessing data in a memory), and the like.

In addition, "determining" as used herein may be interpreted to mean making determination related to resolving, selecting, choosing, establishing, comparing, and the like. In other words, "determining" as used herein may be interpreted to mean making determination related to some operations.

In addition, "determining" as used herein may be interpreted to mean "assuming", "expecting", "considering", and the like.

As used in the present disclosure, the terms "connected" and "coupled," or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access."

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the phrase may mean that "A and B are different from C". The terms such as "separated", "coupled", and the like may be similarly interpreted as "different".

When terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Therefore, the description in the present disclosure is provided for the purpose of describing examples, and thus, should by no means be construed to limit the invention according to the present disclosure in any way.

**Claims**

1. A terminal comprising:

a control section that determines a span pattern including a span for monitoring a physical downlink control channel (PDCCH) based on a monitoring occasion; and
a receiving section that skips monitoring of PDCCH candidates in one or more of the span in a slot.

2. The terminal according to claim 1, wherein the receiving section determines that monitoring of a PDCCH candidate is allowed to be skipped in all the spans in a slot.

3. The terminal according to claim 2, wherein the receiving section skips monitoring of a PDCCH candidate in the slot in order from a PDCCH candidate having a larger control channel element (CCE) index.

4. The terminal according to claim 1, wherein the receiving section determines whether or not monitoring of a PDCCH candidate in a span or another span is allowed to be skipped based on downlink control information detected in the span.

5. A radio communication method of a terminal comprising the steps of:

determining a span pattern including a span for monitoring a physical downlink control channel (PDCCH) based on a monitoring occasion; and
skipping monitoring of PDCCH candidates in one or more of the span in a slot.

6. A base station comprising:

a transmitting section that transmits information on a monitoring occasion used for determining a span pattern including a span for monitoring a physical downlink control channel (PDCCH) to a terminal; and
a control section that performs control such that a PDCCH is not mapped in PDCCH candidates in one or more of the span in a slot assumed that the terminal skips monitoring.

FIG. 1

TIME →

SLOT #0 | SLOT #1

SYMBOL INDEX: 0 1 2 3 4 5 6 7 8 9 10 11 12 13 | 0 1 2 3 4 5 6 7 8 9 10 11 12 13

MO1

MO2

SPAN: span#0 span#1 span#0 span#1

SPAN GAP (Y) = 3 SYMBOLS

SPAN (X) = 7 SYMBOLS

EP 4 099 774 A1

FIG. 2

## FIG. 3A

| | Maximum number $M_{\text{PDCCH}}^{max,(X,Y),\mu}$ of monitored PDCCH candidates per span pattern $(X, Y)$ and per serving cell | | |
|---|---|---|---|
| $\mu$ | (2, 2) | (4, 3) | (7, 3) |
| 0 | M01 | M02 | M03 |
| 1 | M11 | M12 | M13 |

## FIG. 3B

| | Maximum number $C_{\text{PDCCH}}^{max,(X,Y),\mu}$ of non-overlapped CCEs per span pattern $(X, Y)$ and per serving cell | | |
|---|---|---|---|
| $\mu$ | (2, 2) | (4, 3) | (7, 3) |
| 0 | C01 | C02 | 56 |
| 1 | C11 | C12 | 56 |

FIG. 4

FIG. 5

FIG. 6

FIG. 7

10, 20

FIG. 8

| | | | |
|---|---|---|---|
| | **INTERNATIONAL SEARCH REPORT** | International application No. | |
| | | PCT/JP2020/003565 | |

**A. CLASSIFICATION OF SUBJECT MATTER**
Int. Cl. H04W72/04(2009.01)i, H04W52/02(2009.01)i
FI: H04W72/04 136, H04W72/04 131, H04W52/02 111

According to International Patent Classification (IPC) or to both national classification and IPC

**B. FIELDS SEARCHED**

Minimum documentation searched (classification system followed by classification symbols)
Int. Cl. H04W72/04, H04W52/02

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2019/0335425 A1 (LG ELECTRONICS INC.) 31 October 2019, abstract, claims 1-4, paragraphs [0060], [0080]-[0129], fig. 3 | 1-6 |
| X | Huawei, Summary of 7.2.6.1 PDCCH enhancements[online], 3GPP TSG RAN WG1 #98b R1-1911272, 20 October 2019, pp. 1-60, 33-53 [3Increased PDCCH monitoring capability] | 1-6 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.09.2020 | 24.09.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2020/003565

| Patent Documents referred to in the Report | Publication Date | Patent Family | Publication Date |
|---|---|---|---|
| US 2019/0335425 A1 | 31.10.2019 | JP 2020-505795 A abstract, claims 1-4, paragraphs [0058], [0079]-[0133], fig. 3 WO 2019/112209 A1 KR 10-2019-0068422 A CN 110383729 A | |

Form PCT/ISA/210 (patent family annex) (January 2015)